# EUROPÄISCHE PATENTSCHRIFT

(11) **EP 3 231 559 B1**
(45) Veröffentlichungstag und Bekanntmachung des Hinweises auf die Patenterteilung: **22.05.2019**
(21) Anmeldenummer: 17166480.8
(22) Anmeldetag: 13.04.2017
(51) Int. Cl.: B25B 23/00, B23B 49/00, B23B 31/02, B25F 5/00

(54) **FUTTER MIT EINSTELLBAREM TIEFENANSCHLAG**
CHUCK WITH ADJUSTABLE DEPTH STOP
MANDRINS COMPRENANT UNE BUTÉE DE PROFONDEUR RÉGLABLE

(30) Priorität: 15.04.2016 DE 102016107047
(43) Veröffentlichungstag der Anmeldung: 18.10.2017
(73) Patentinhaber: Wera Werkzeuge GmbH, 42349 Wuppertal (DE)
(72) Erfinder: Abel, Michael, 42477 Radevormwald (DE)
(74) Vertreter: Grundmann, Dirk

(56) Entgegenhaltungen:
- EP-A1- 2 093 001
- WO-A2-02/24367
- DE-U1- 8 022 742
- DE-U1-202012 105 081
- US-A- 5 147 164
- US-A1- 2010 224 038

## Beschreibung

### Gebiet der Technik

Die Erfindung betrifft ein Futter gemäß Gattungsbegriff des Anspruches 1.

### Stand der Technik

Ein gattungsgemäßes Futter wird von der US 2010/0224038 A1 offenbart. Auf ein Ende einer Hülse ist eine aus Kunststoff bestehende Kappe aufgeclipst. Die Kappe kann zusätzlich verklebt sein. Die Kappe besitzt einen großen Außendurchmesser und soll das Werkstück vor Beschädigungen schützen.

Die DE 20 2012 105 081 U1 offenbart ebenfalls ein Futter mit einer auf eine Hülse aufgeclipsten Kappe.

Die US 5,147,164 A offenbart ein Gleitelement aus Filz, das aus einer gelochten Kreisscheibe besteht. Das Gleitelement ist an einer Stirnseite eines Adapters angeklebt.

Ein Futter mit einem einstellbaren Tiefenanschlag beschreibt die DE 10 2005 017 872 A1. Das Futter besitzt einen Antriebsschaft, der in ein von einem Elektromotor angetriebenen Futter eines Elektroschraubers einspannbar ist. Der Antriebsschaft kann um eine Drehachse gedreht werden. In der Drehachse liegt eine Aufnahme, bei der es sich um eine Sechskanthöhlung handelt, in die ein Sechskantabschnitt eines Schraubendreherbits eingesteckt werden kann, so dass dieses Werkzeug um seine Figurenachse gedreht wird, wenn der Schaft vom Elektroschrauber gedreht wird. Es ist eine Anschlaghülse vorgesehen, die eine Stirnseite aufweist. Der axiale Abstand der Stirnseite zur Aufnahme kann eingestellt werden, um damit die Einschraubtiefe einer Schraube in ein Werkstück festzulegen. Bei der Verwendung dieses Schraubwerkzeuges wird die Arbeitsspitze des Schraubendrehereinsatzes in eine Schraubwerkzeug-Eintrittsöffnung eines Schraubenkopfes einer Schraube eingesetzt. Die Schraube wird sodann in das Werkstück eingedreht, wobei sich der Schraubenkopf der Werkstückoberfläche annähert. Der Schraubenkopf, bei dem es sich in der Regel um einen Senkkopf handelt, soll derart weit in das Werkstück eingedreht werden, dass die Stirnfläche des Schraubenkopfes bündig in der Oberfläche des Werkstückes bündig liegt. Hierzu dient die Anschlaghülse. Eine Axialverlagerung des Werkzeuges ist nur so lange möglich, bis die Stirnseite der Anschlaghülse die Werkstückoberfläche berührt. Dann gleitet die Stirnseite der Anschlaghülse über die Werkstückoberfläche, bis sich der Schraubenkopf aus der Eingriffsstellung zum Schraubendreherbit entfernt hat. Bei einem richtig eingestellten axialen Abstand der Stirnseite der Anschlaghülse vom Arbeitsende des Bits liegt dann die Stirnfläche des Schraubenkopfes bündig in der Werkstückoberfläche.

Wird auf das Schraubwerkzeug ein hoher axialer Druck ausgeübt, kann sich die Stirnseite der Anschlaghülse geringfügig in die Werkstückoberfläche eindrücken. Bei einem mäßigen axialen Druck und einer empfindlichen Oberfläche kann die Reibung der Stirnseite auf der Werkstückoberfläche den ästhetischen Eindruck störende Spuren hinterlassen.

Die DE 8114 716 U1 beschreibt einen Tiefenanschlag für einen ElektroSchrauber, bei dem die Stirnseite mit einem Gummi, Plastik oder anderweitigem weichen, elastischen Material versehen ist.

Die EP 2 363 246 A2 beschreibt ein Schraubwerkzeug, dessen Stirnseite mit einem Anschlagring aus elastischem Material versehen ist. Der kappenartige Anschlagring ist auf einem Trägerring aufgesteckt. Die dort beschriebene Vorrichtung besitzt ein die Einstecköffnung für den Bit ausbildendes Bauteil, welches beim Drehen des Antriebsschaftes mitgeschleppt wird, sich in einer Anschlagstellung aber vom Antriebsschaft entkuppelt.

Die DE 80 22 742 U1 beschreibt einen Tiefenanschlag, bei dem Werkstücke dadurch geschützt werden, dass auf der Stirnfläche des Tiefenanschlages Filz angebracht ist.

Die DE 85 15 960 U1 zeigt einen an einem Bohrer befestigbaren Anschlag, der eine zur Bohrspitze weisende Seite aufweist, die mit einem elastischen Material, wie Gummi oder Kunststoff, versehen ist.

### Zusammenfassung der Erfindung

Der Erfindung liegt die Aufgabe zugrunde, das eingangs genannte Futter gebrauchsvorteilhaft weiterzubilden.

Gelöst wird die Aufgabe durch die im Anspruch 1 angegebene Erfindung.

Zunächst und im Wesentlichen wird vorgeschlagen, dass die Anschlagfläche aus einem Filz besteht. Der Werkstoff hat die Eigenschaft, ohne Spuren zu hinterlassen, auf der Oberfläche des Werkstücks gleiten zu können. Es ist somit vorgesehen, dass aus der Oberfläche der Anschlagfläche Fasern, insbesondere textile Fasern, herausragen. Hierzu handelt es sich bei der Oberfläche der Anschlagfläche bevorzugt um die Fläche eines Filzkörpers. Es ist ferner vorgesehen, dass die Anschlagfläche von einem Gleitelement ausgebildet ist, welches an der Stirnseite der Anschlaghülse anhaftet. Dieses Gleitelement besteht aus Filz, der ohne Spuren zu hinterlassen auf der Werkstückoberfläche abgleiten kann. Das Gleitelement ist bevorzugt reversibel mit der Stirnseite der Anschlaghülse verbunden. Es kann von der Anschlaghülse entfernt werden und gegen ein anderes Gleitelement ausgetauscht werden. Hierzu ist es insbesondere von Vorteil, wenn das Gleitelement mit einer Klebeschicht mit der Stirnseite der Anschlaghülse verbunden ist. Bei dem Gleitelement kann es sich um einen ringscheibenförmigen Körper handeln. Diese Ringscheibe besitzt eine Materialstärke, die wesentlich geringer ist, als ihre radiale Erstreckung von einem radial inneren Rand zu einem radial äußeren Rand. Der radial innere Rand kann radial innerhalb des radial inneren Randes der Anschlaghülse liegen. Der radial äußere Rand des Gleitelementes kann radial außerhalb des radial äußeren Randes der Anschlaghülse liegen. Hierzu ist der Außendurchmesser des Gleitelementes größer ist, als der Außendurchmesser der kreisringförmigen Stirnseite der Anschlaghülse. Es ist besonders bevorzugt, wenn das Gleitelement den größten Durchmesser des gesamten Futters aufweist. Ferner kann vorgesehen sein, dass die Anschlaghülse gegen die Rückstellkraft einer Feder gegenüber dem Schaftabschnitt bzw. einem mit dem Schaftabschnitt verbundenen Zentralelement verschieblich ist. Die Verschieblichkeit gegen Federrückstellung erfolgt dabei in Richtung des Antriebsschaftes, also weg vom Schraubeinsatz. Die Stirnseite der Anschlaghülse, die eine Befestigungsfläche zur Befestigung des Gleitelementes ausbildet, weist einen ringförmigen Fortsatz auf. Der Fortsatz erstreckt sich von der Stirnfläche weg und bildet eine ringförmige Anlagefläche. An dieser Zylindermantelfläche stützt sich eine radial innere Umfangsfläche des Gleitelementes ab, so dass der Fortsatz einen Zentrierfortsatz ausbildet. Die axiale Länge des Fortsatzes ist geringer als die Materialstärke des Gleitelementes. In einer Weiterbildung der Erfindung ist vorgesehen, dass die Anschlaghülse aus zwei miteinander verbundenen Abschnitten besteht. Ein oberer Abschnitt kann axial verstellbar mit der Einstellhülse verbunden sein. Er kann ein Innengewinde aufweisen, das auf ein Außengewinde der Einstellhülse aufgeschraubt ist. Eine Drehsicherung kann durch eine Kontermutter erfolgen. Über eine Klipsverbindung oder dergleichen ist der untere Abschnitt der Anschlaghülse mit dem oberen Abschnitt verbunden. Der untere Abschnitt bildet die Stirnseite aus, an der das Gleitelement befestigt ist. Der untere Abschnitt bildet darüber hinaus auch den Fortsatz zum Zentrieren des Gleitelementes aus. In einer Weiterbildung der Erfindung ist die Einstecköffnung zum Einstecken des Sechskantabschnittes eines Bits einem gesonderten Körper zugeordnet, der mit dem Zentralelement drehfest gekuppelt ist. Dieser Körper kann einen Einsatz ausbilden, der in einer Höhlung des Zentralelementes steckt. Der die Einstecköffnung aufweisende Körper ist mittels Kupplungselementen mit dem Zentralelement drehgekuppelt. Von einer Kupplungsstellung, in der eine auf den Antriebsschaft aufgebrachte Drehbewegung auf das Schraubwerkzeug übertragen wird, können die Kupplungselemente in eine entkuppelte Stellung gebracht werden, in der sich der das Schraubwerkzeug aufnehmende Körper frei gegenüber dem Zentralelement drehen kann. Die Kupplungselemente sind bevorzugt Kugeln, die in Fenstern einer Wandung des Zentralelementes einliegen, wobei die Wandung die Höhlung des Zentralelementes umgibt. Radial außerhalb der Wandung des Zentralelementes befindet sich eine Zylinderinnenwand der Einstellhülse, die eine Anlagefläche, eine Steuerfläche und eine Steuerfläche und eine Ausweichkammer ausbildet. Die Ausweichkammer wird von einem durchmesservergrößerten Abschnitt der Innenwandung ausgebildet. Zwischen der Wandung der Ausweichkammer und der Anlagefläche erstreckt sich eine trichterförmige Steuerfläche. In einer Ausgangsstellung liegt der durchmessergeringe Abschnitt der Innenwandung der Einstellhülse vor dem Kupplungsfenster, so dass die Kupplungskugel in eine Kupplungsnische des Einsatzes beaufschlagt ist. Hierdurch ist eine formschlüssige drehfeste Verbindung zwischen Zentralelement und Einsatz geschaffen. Stößt das Gleitelement beim Einschrauben einer Schraube gegen einen Widerstand, so hat das weitere Einschrauben der Schraube eine Axialverlagerung der mit der Anschlaghülse verbundenen Einstellhülse zur Folge, so dass zunächst die Steuerfläche und anschließend die Ausweichkammer radial auswärts des Kupplungsfensters liegt. Die Kupplungskugel kann dann radial aus der Kupplungsnische austreten, so dass der Einsatz vom Zentralelement entkuppelt ist.

### Kurze Beschreibung der Zeichnungen

Ausführungsbeispiele werden nachfolgend anhand beigefügter Zeichnungen erläutert. Es zeigen:

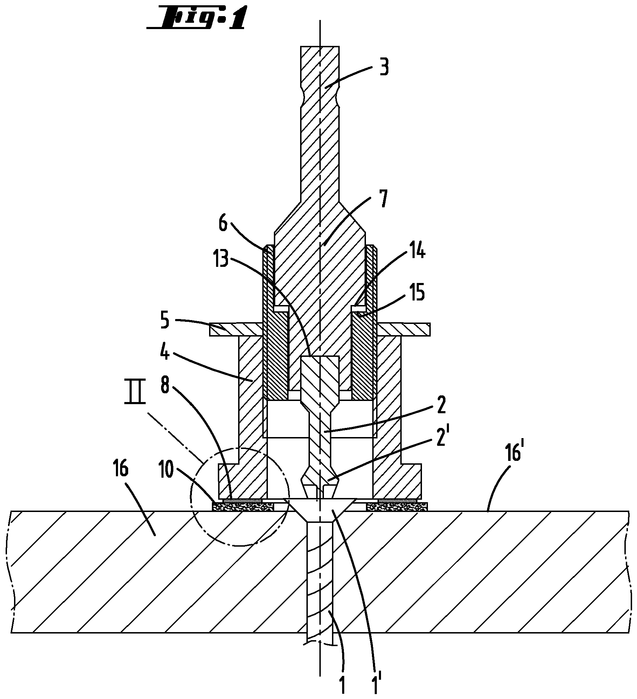

- Fig. 1: in einer Längsschnittdarstellung ein im Wesentlichen rotationssymmetrisches Futter beim Eindrehen einer Schraube 1 in ein Werkstück 16 in dem Augenblick, in dem eine Anschlagfläche 11 eines Gleitelementes 10 die Oberfläche 16' des Werkstücks 16 berührt,
- Fig. 2: vergrößert den Ausschnitt II in Figur 1,
- Fig. 3: eine perspektivische Darstellung eines Gleitelementes,
- Fig. 4: den Schnitt gemäß der Linie IV - IV in Figur 2,
- Fig. 5: die Seitenansicht eines Ausführungsbeispiels der Erfindung,
- Fig. 6: den Schnitt gemäß der Linie VI-VI in Figur 5,
- Fig. 7: den Schnitt gemäß der Linie VII-VII in Figur 5,
- Fig. 8: eine perspektivische Darstellung des in der Figur 5 dargestellten Futters,
- Fig. 9: einen Schnitt gemäß der Linie IX-IX in Figur 7 in einer Ausgangsstellung, in der drei Kupplungskugeln 32 durch radial äußere Anlage an einer Anlagefläche 35 in eine Kupplungsnische 34 beaufschlagt sind,
- Fig. 10: eine Folgedarstellung zu Figur 9 nach einer ersten Axialverlagerung einer mit einer Anschlaghülse 4 verbunden Einstellhülse 6 in Richtung auf einen Antriebsschaft 3, so dass die Kupplungskugeln 32 in den Bereich einer Steuerfläche 36 treten,
- Fig. 11: eine weitere Folgedarstellung, in der die Kupplungskugeln 32 in eine Ausweichkammer 37 eingetreten sind und ihre Kupplungsnischen 34 verlassen haben,
- Fig. 12: vergrößert den Ausschnitt XII in Figur 10,
- Fig. 13: eine erste Explosionsdarstellung und
- Fig. 14: eine zweite Explosionsdarstellung.

### Beschreibung der Ausführungsformen

Die Figuren zeigen ein Futter mit Tiefenanschlag, welches einen Antriebsschaft 3 aufweist, der in ein Futter eines Elektroschraubers eingespannt werden kann. Bei dem Antriebsschaft 3 handelt es sich um einen Sechskantschaft.

Der Antriebsschaft 3 ist drehfest mit einem Zentralelement 7 verbunden. Das Zentralelement 7 und der Antriebsschaft 3 können materialeinheitlich ausgebildet sein. Auf der vom Antriebsschaft 3 wegweisenden Seite besitzt das Zentralelement 7 eine Aufnahme 13 zur Aufnahme eines Werkzeuges 2. Die Aufnahme 13 ist als Einstecköffnung mit einem Sechskantquerschnitt ausgebildet, an deren Seitenwänden Haftelemente vorgesehen sind, mit denen ein Sechskantabschnitt des Werkzeugs 2 axial in der Aufnahme 13 gehalten werden kann.

Bei dem Werkzeug 2 handelt es sich um einen Schraubendrehereinsatz, einen sogenannten Bit, der einen Sechskantabschnitt aufweist, der in der Aufnahme 13 steckt und der ein Arbeitsende 2' besitzt, welches profiliert ist, um in eine Schraubwerkzeug-Eintrittsöffnung eines Schraubwerkzeuges derart eintreten zu können, dass eine Drehung des Schraubendrehereinsatzes 2 auf die Schraube 1 übertragen wird. Das Arbeitsende 2' besitzt ein Kreuzschlitzprofil.

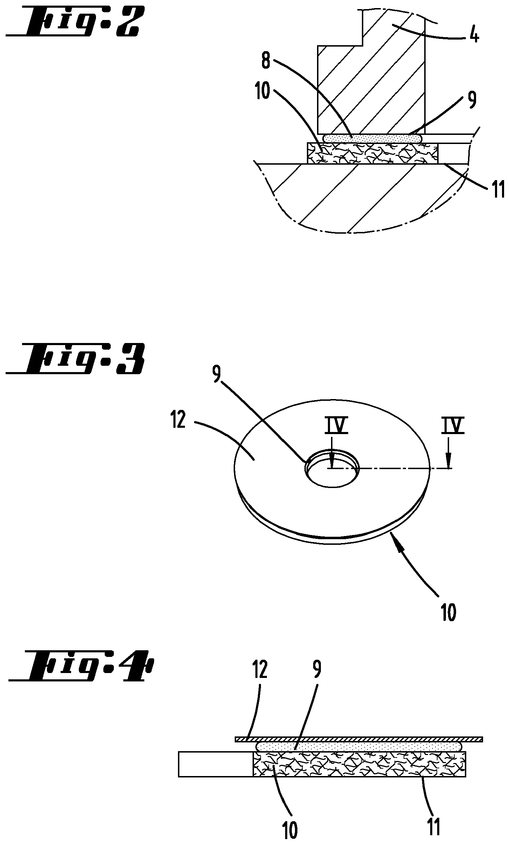

Es ist ein Gleitelement 10 vorgesehen. Das Gleitelement 10 wird in den Figuren 2 und 3 dargestellt. Es besteht aus einem ringscheibenförmigen Körper 10. Der Körper 10 besitzt eine zentrale Öffnung und somit einen Innendurchmesser und einen Außendurchmesser. Eine Breitseitenfläche des Gleitelementes 10 bildet eine Anschlagfläche 11 aus. Auf der der Anschlagfläche 11 gegenüberliegenden Breitseite des Gleitelementes 10 befindet sich eine Klebeschicht 9, die von einem Abdeckstreifen 12 abgedeckt ist. Der Abdeckstreifen 12 ist lösbar mit der Klebeschicht verbunden. Nach Ablösen des Abdeckstreifens 12 von der Klebeschicht 9 kann die Klebeschicht gegen die Stirnseite 8 der Anschlaghülse 4 gebracht werden, so dass das Gleitelement 10 mit der Anschlaghülse 4 klebeverbunden wird. Die Oberfläche des Gleitelementes 10 ist derart auf die Klebeeigenschaft der Klebeschicht 9 eingestellt, dass die Klebeschicht 9 stärker am Gleitelement 10 anhaftet als an der Stirnseite 8 der Anschlaghülse. Die Anschlaghülse kann aus Metall bestehen.

Aus der Figur 2 ist zu entnehmen, dass der radial äußere Rand des Gleitelementes 10 über den radial äußeren Rand der Stirnseite 8 bzw. der Anschlaghülse 4 hinausragt.

Das Gleitelement 10 besteht aus Filz, also einem textilen Werkstoff, der Fasern aufweist, die über die Anschlagfläche 11 hinausragen und die der Anschlagfläche 11 eine weiche Eigenschaft verleihen. Die Anschlagfläche 11 kann ohne Spuren zu hinterlassen über eine glatte, aber auch über eine strukturierte Oberfläche 16' eines Werkstücks 16 gleiten.

Die Klebeverbindung zwischen Klebeschicht 9 und Stirnseite 8 ist bevorzugt reversibel, so dass das Gleitelement 10 mitsamt der Klebeschicht 9 von der Stirnseite 8 entfernbar ist, um ein verbrauchtes Gleitelement 10 gegen ein neues Gleitelement 10 auszutauschen.

Die Funktionsweise der Vorrichtung ist die Folgende: Zunächst wird, insbesondere durch Vorversuche, der axiale Abstand der Anschlagfläche 11 zum Arbeitsende 2' des Bits 2 derart eingestellt, dass beim Einschrauben einer Schraube 1 in ein Werkstück 16 zunächst die Schraube 1 so weit in das Werkstück 16 eingedreht wird, dass nur der Kopf der Schraube 1 über die Oberfläche16' hinausragt. In der Endphase der Einschraubbewegung tritt die Anschlagfläche 11 in eine berührende Anlage gegen die Oberfläche 16', so dass eine weitere Axialabwärtsverlagerung des Schraubwerkzeug-Einsatzes 2 unterbunden ist. Beim Weiterdrehen des Antriebsschaftes 3 gleitet die Anschlagfläche 11 über die Oberfläche 16' des Werkstücks 16. Da das Arbeitsende 2' noch bereichsweise in der Schraubwerkzeug-Eintrittsöffnung der Schraube 1 steckt, wird die Schraube weitergedreht, bis ihre Oberfläche mit der Oberfläche 16' bündig ist. Erst dann soll das Arbeitsende 2' aus der Schraubwerkzeug-Eintrittsöffnung herausgetreten sein.

Die Anschlaghülse 4 bzw. die Einstellhülse 6 kann drehbar mit dem Zentralelement 7 verbunden werden. Die Einstellhülse 6 und die mit ihr fest verbundene Anschlaghülse 4 wird beim Eindrehen der Schraube 1 aufgrund der Reibkraft zwischen Einstellhülse 6 und Zentralelement 7 drehmitgeschleppt. Die Anschlaghülse 4 bzw. die mit ihr fest verbundene Einstellhülse 6 wird nach der Berührung der Oberfläche 16' durch das Gleitelement 10 abgebremst und kann zum Stillstand kommen.

Mit einem Werkzeug, bei dem der Axialabstand zwischen Anschlagfläche 11 und Arbeitsende 2' richtig eingestellt ist, lässt sich eine Vielzahl von Schrauben jeweils so in das Werkstück eindrehen, dass die Stirnseite des Schraubenkopfes bündig in der Oberfläche 16' liegt. Dabei gleitet in der Endphase des Einschraubens die weiche Anschlagfläche 11 ohne Spuren zu hinterlassen über die Oberfläche 16' des Werkstückes 16. Die Werkstückoberfläche 16' kann insbesondere aus Holz bestehen. Sie kann aber auch aus Metall oder Kunststoff bestehen.

Die vorstehenden Erläuterungen betreffen ein Futter, bei dem zur Entkupplung das Arbeitsende 2' des Schraubeneinsatzes 2 aus der Schraubwerkzeugeingriffsöffnung des Kopfes der Schraube 1 heraus gleitet. Dies erfolgt aufgrund einer relativen axialen Verlagerung von Schraube 1 und Schraubeneinsatz 2. Die Erfindung umfasst aber auch solche Lösungen, bei denen der Eingriff des Arbeitsendes 2' in der Schraubwerkzeugeingriffsöffnung erhalten bleibt und die Drehmitnahme zwischen Antriebsschaft 3 und Schraubeneinsatz 2 in der Endphase des Einschraubens aufgehoben wird. Derartige Futter besitzen eine Kupplung. Die Kupplung kann zwei bei einer axialen Beabstandung auseinander tretende Kupplungsglieder umfassen, wie sie in den DE 198 44 064 A1, DE 20 2008 003 131 U1 oder DE 36 378 52 C1 beschrieben wird.

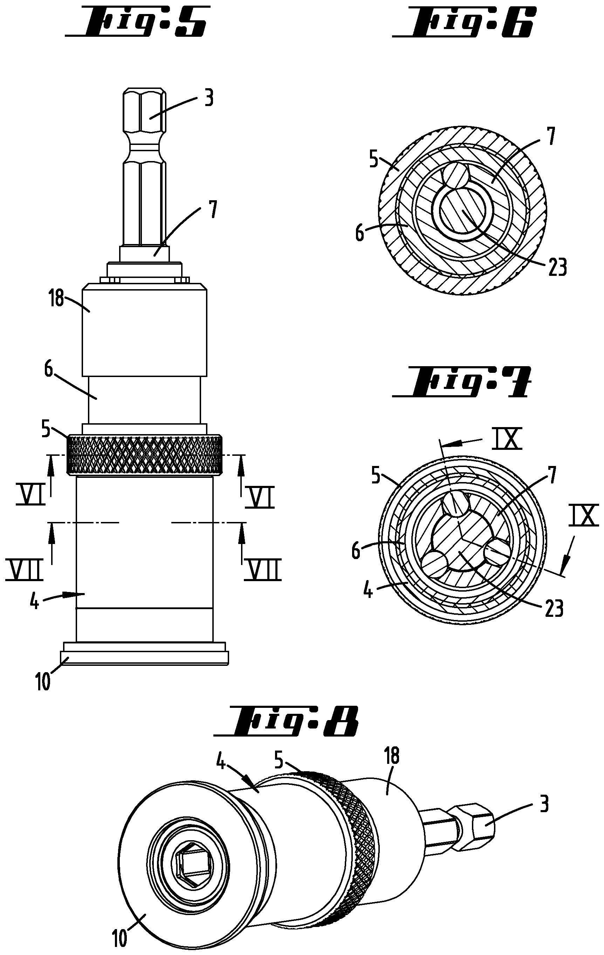

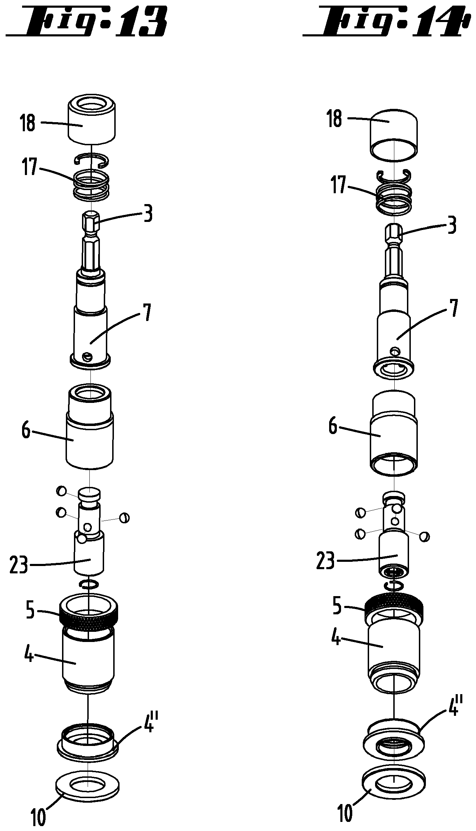

Das in den Figuren 5 bis 14 dargestellte Ausführungsbeispiel der Erfindung besitzt einen Antriebsschaft 3, der materialeinheitlich mit einem Zentralelement 7 verbunden ist. Der Antriebsschaft 3 besitzt einen Sechskantquerschnitt und kann in ein Futter eines Elektroschraubers eingesteckt werden.

Das Zentralelement 7 besitzt eine zentrale, axial offene Höhlung 24, die einen kreisrunden Querschnitt aufweist. In der Höhlung 24 steckt ein Abschnitt eines Einsatzes 23, der an seiner dem Antriebsschaft 3 gegenüberliegenden Seite eine Einstecköffnung 3 zum Einstecken des Sechskantabschnitts eines Schraubwerkzeuges 2 aufweist. Eine Ringnut 31 des in der Höhlung 24 steckenden Abschnittes des Einsatzes 23 bildet eine Haltenut aus, in die eine Haltekugel 30 eingreift, die in einem Fenster einer Wandung der Höhlung 24 gelagert ist. Die radial nach außen weisende Oberfläche der Kugel liegt an einer Innenmantelfläche einer Einstellhülse 6 an, so dass die in die Haltenut 31 eingreifende Haltekugel 30 den Einsatz 23 axial gegenüber dem Zentralelement 7 sichert.

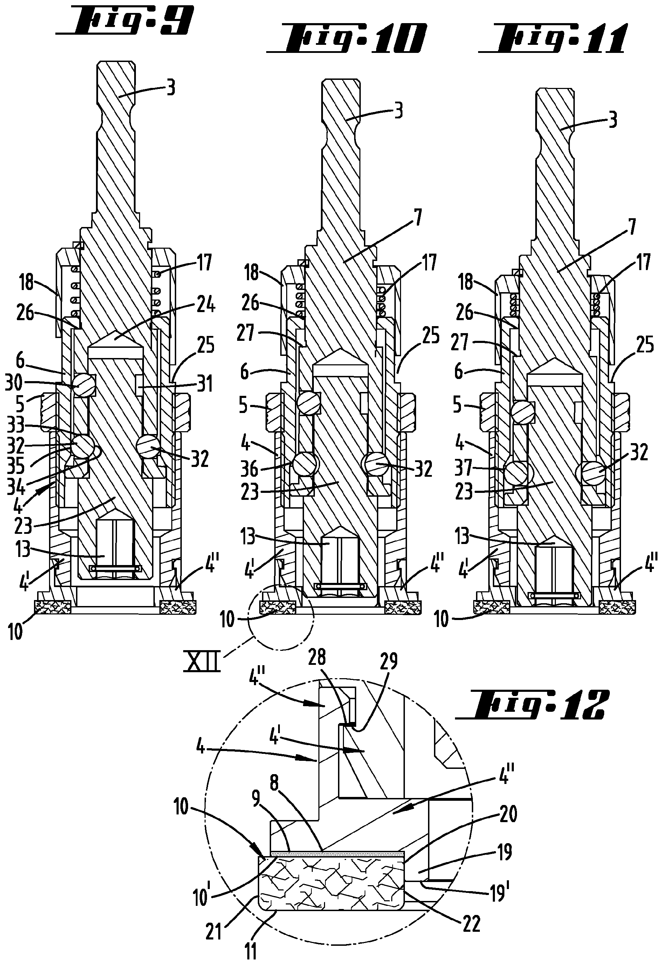

Es sind drei in einer gemeinsamen Ebene angeordnete Kupplungskugeln 32 vorgesehen, wobei jede Kupplungskugel 32 in einem Fenster 33 der Wandung der Höhlung 24 liegt. In der in Figur 9 dargestellten Kupplungsstellung liegt die radial nach außen weisende Kugelfläche der Kupplungskugel 32 an einer Zylinderinnenfläche an. Es handelt sich dabei um eine Anlagefläche 35, die von der Einstellhülse 6 ausgebildet ist. Die Anlagefläche 35 erstreckt sich auf einer Kreisbogenlinie um das Zentrum des Antriebsschaftes 3 mit einem Durchmesser, der so bemessen ist, dass die nach radial innen weisenden Kugelflächen formschlüssig in Kupplungsnischen 34 des Einsatzes 23 eingreifen so dass der Einsatz 23 drehfest an das Zentralelement 7 gekoppelt ist.

In Richtung weg vom Antriebsschaft 3 geht die zylindrische Anlagefläche 35 in eine konische Steuerfläche 36 über. An die Steuerfläche 36 schließt sich eine Zylinderinnenfläche an, die eine Ausweichkammer 37 in Radialauswärtsrichtung begrenzt. Die Ausweichkammer 37 wird von einem durchmessergrößeren Abschnitt der Höhlung der Einstellhülse 6 ausgebildet.

Die Einstellhülse 6 besitzt ein Außengewinde, auf dem ein Innengewinde einer Anschlaghülse 4 aufgeschraubt ist. Das Innengewinde wird von einem oberen Abschnitt 4' der Anschlaghülse 4 ausgebildet, der mit einem unteren Abschnitt 4" der Anschlaghülse 4 über eine Aufsteck-Klipsverbindung verbunden ist. Der untere Abschnitt 4" ist insbesondere lösbar am oberen Abschnitt 4' befestigt.

Der untere Abschnitt 4" besitzt eine Höhlung mit einer Höhlungswandung, die auf einer Zylinderinnenfläche verläuft, wobei der Grundriss dieser Fläche einen geringeren Durchmesser aufweist, als die Wandung der Ausweichkammer 37.

Der untere Abschnitt 4" bildet eine Stirnfläche 8 aus, die eine Befestigungsfläche zur Befestigung des Gleitelementes 10 ausbildet. Eine Breitseitenfläche 10' des Gleitelementes 10 ist über eine Klebeschicht 9 mit der Stirnseite 8 verbunden. Die gegenüberliegende Breitseitenfläche des Gleitelementes 10 bildet eine Anschlagfläche 11 aus, die beim Einschrauben einer Schraube gegen das Werkstück treten kann.

Das aus Filz gefertigte Gleitelement 10 besitzt eine radial äußere Umfangsfläche 21, die auf einem Kreis verläuft, dessen Durchmesser größer ist, als der Durchmesser des unteren Abschnitts 4" der Anschlaghülse 4. Der Durchmesser der radial äußeren Umfangsfläche 21 ist darüber hinaus beim bevorzugten Ausführungsbeispiel auch größer, als der Radialabstand irgendeines anderen Elementes des Futters von der Drehachse.

Das Gleitelement 10 besitzt eine radial innere Umfangsfläche 22, die an einer Anlagefläche 20 eines Fortsatzes 19 anliegt. Der Fortsatz 19 entspringt der Stirnseite 8 der Anschlaghülse 4, ist kreisrund/ringförmig und besitzt eine axiale Länge, die geringer ist, als die Materialstärke des Gleitelementes 10, so dass eine Stirnseite 19' des Fortsatzes 9 in Axialrichtung von der Anschlagfläche 11 beabstandet ist und insbesondere mittig zwischen Stirnseite 8 und Anschlagfläche 11 verläuft.

Der axiale Abstand der Anschlagfläche 11 gegenüber der Einstellhülse 6 kann durch relatives Verdrehen der Anschlaghülse 4 gegenüber der Einstellhülse 6 eingestellt werden. Die Drehstellung der Einstellhülse 6 gegenüber der Anschlaghülse 4 wird durch eine Kontermutter 5 gesichert.

Es ist ein Haubenelement 18 vorgesehen, welches axialfest am Antriebsschaft 3 bzw. am Zentralelement 7 befestigt ist und den zum Antriebsschaft 3 weisenden Abschnitt der Einstellhülse 6 überfängt. An einer inneren Stufe des Haubenelementes 18 stützt sich ein Ende einer Druckfeder 17 ab. Das andere Ende der Druckfeder 17 stützt sich an einem Kragen 26 der Einstellhülse 6 ab. Die Druckfeder 17 wird zusammengedrückt, wenn sich die Einstellhülse 6 axial gegenüber dem Antriebsschaft 3 in Richtung auf den Antriebsschaft 3 verlagert. Bei dieser Bewegung passiert die Steuerfläche 36 die Kupplungskugel 32, so dass die Kupplungskugel 32 in Radialauswärtsrichtung die Kupplungsnische 34 verlassen kann, um bei einer weiteren Axialverlagerung der Einstellhülse 6 in die Ausweichkammer 37 einzutreten. In diesem, in der Figur 11 dargestellten Betriebszustand, hat die Kupplungskugel 32 vollständig die Kupplungsnische 34 verlassen, so dass der Einsatz 23 nicht mehr vom Antriebsschaft 3 drehmitgeschleppt wird.

Die Figur 12 zeigt ferner Details betreffend die Verbindung des oberen Abschnittes 4' mit dem unteren Abschnitt 4" der Anschlaghülse 4. Eine Rastschulter 28 des unteren Abschnittes 4" übergreift eine Raststufe 29 des oberen Abschnittes 4'.

Ansonsten wird Bezug genommen auf die Ausführungen zum ersten Ausführungsbeispiel.

**Liste der Bezugszeichen**

| | | | |
|---|---|---|---|
| 1 | Schraube | 19 | Fortsatz |
| 1' | Kopf | 19' | Stirnseite |
| 2 | Schraubeinsatz (Bit)/Werkzeug | 20 | Anlagefläche |
| | | 21 | radial äußere Umfangsfläche |
| 2' | Arbeitsende | 22 | radial innere Umfangsfläche |
| 3 | Antriebsschaft | 23 | Einsatz |
| 4 | Anschlaghülse | 24 | Höhlung |
| 4' | oberer Abschnitt | 25 | Schulter |
| 4" | unterer Abschnitt | 26 | Kragen |
| 5 | Kontermutter | 27 | Stufe |
| 6 | Einstellhülse | 28 | Rastschulter |
| 7 | Zentralelement | 29 | Raststufe |
| 8 | Stirnseite | 30 | Haltekugel |
| 9 | Klebeschicht | 31 | Haltenut |
| 10 | Gleitelement | 32 | Kupplungskugel |
| 10' | Breitseitenfläche | 33 | Kupplungsfenster |
| 10" | Breitseitenfläche | 34 | Kupplungsnische |
| 11 | Anschlagfläche | 35 | Anlagefläche |
| 12 | Abdeckstreifen | 36 | Steuerfläche |
| 13 | Aufnahme, Einstecköffnung | 37 | Ausweichkammer |
| 14 | Stufe | | |
| 15 | Schulter | | |
| 16 | Werkstück | | |
| 16' | Oberfläche | | |
| 17 | Feder | | |
| 18 | Haubenelement | | |

## Patentansprüche

1. Futter mit Tiefenanschlag mit einem Antriebsschaft (3), einer Aufnahme (13) zur Aufnahme eines Werkzeuges (2) und mit einer Anschlagfläche (11) zum tiefenbegrenzenden Anschlag einer radial bezogen auf eine durch den Antriebsschaft (3) und/oder die Aufnahme (13) gelegten Drehachse entfernt von der Aufnahme (13) angeordneten Anschlaghülse (4) auf der Oberfläche (16') eines Werkstücks (16), wobei die Anschlagfläche (11) von einer ersten Breitseitenfläche (10') eines als ringförmiger Körper ausgebildeten Gleitelementes (10) ausgebildet ist, das mit einer von der Anschlagfläche (11) wegweisenden zweiten Breitseitenfläche (10") an der Stirnseite (8) der Anschlaghülse (4) mittels einer Verklebung befestigt ist, wobei der Außendurchmesser das Gleitelementes (10) größer ist als der Außendurchmesser der Stirnseite (8) und wobei eine radial innere Umfangsfläche (22) des Gleitelementes (10) an einer Anlagefläche (20) anliegt, **dadurch gekennzeichnet, dass** das Gleitelement (10) von einer gelochten Kreisscheibe aus Filz gebildet ist und mittels einer Klebeschicht (9) mit der Stirnseite (8) verbunden ist und die Anlagefläche (20) von einem der Stirnseite (8) entspringenden, ringförmigen Fortsatz (19) ausgebildet ist.

2. Futter nach Anspruch 1, **dadurch gekennzeichnet, dass** die Klebeschicht (9) eine reversible Klebeschicht ist.

3. Futter nach einem der vorhergehenden Ansprüche, **dadurch gekennzeichnet, dass** eine radial äußere Umfangsfläche (21) des Gleitelementes den größten Durchmesser des Futters aufweist.

4. Futter nach einem der vorhergehenden Ansprüche, **dadurch gekennzeichnet, dass** die Anschlaghülse (4) gegen die Rückstellkraft einer Feder (17) gegenüber dem Antriebsschaft (3) verschieblich ist.

5. Futter nach einem der vorhergehenden Ansprüche, **dadurch gekennzeichnet, dass** die Anschlaghülse (4) einen oberen Abschnitt (4') und einen unteren Abschnitt (4") aufweist, wobei der obere Abschnitt (4') an einer Einstellhülse (6) befestigt ist und der untere Abschnitt (4") den Fortsatz (19) aufweist und das Gleitelement (10) trägt und insbesondere austauschbar mit dem oberen Abschnitt (4') verbunden ist.

6. Futter nach einem der vorhergehenden Ansprüche, **gekennzeichnet durch** eine Höhlung (24) eines mit dem Antriebsschaft (3) fest verbundenen Zentralelementes (7), in der ein Einsatz (23) einsteckt, der die Aufnahme (13) ausbildet.

7. Futter nach Anspruch 6, **gekennzeichnet durch** Kupplungselemente, die in einer Ausgangsstellung den Einsatz (23) drehfest an das Zentralelement (7) kuppeln und nach einer Axialverlagerung der Anschlaghülse (4) den Einsatz (23) vom Zentralelement (7) drehentkuppeln.

8. Futter nach Anspruch 7 **dadurch gekennzeichnet, dass** die Kupplungselemente von in einem Kupplungsfenster (33) einliegenden Kupplungskugeln (32) ausgebildet sind, die in einer entkuppelten Stellung in eine Ausweichkammer (37) ausweichen.

9. Futter nach Anspruch 8 in Verbindung mit Anspruch 5, **dadurch gekennzeichnet, dass** die Einstellhülse (6) eine Steuerflanke (36) aufweist, die zwischen einer die Ausweichkammer (37) begrenzenden Innenwandung der Einstellhülse (6) und einer Anlagefläche (35) angeordnet ist, die ebenfalls von einem Innenwandungsabschnitt der Einstellhülse (6) ausgebildet ist.

## Claims

1. Chuck comprising a depth stop, comprising a drive shaft (3), a receiving portion (13) for receiving a tool (2), and comprising a stop face (11) for depth-limiting abutment of a stop sleeve (4) on the surface (16') of a tool (16), which stop sleeve is arranged remotely from the receiving portion (13) and radially with respect to an axis of rotation running through the drive shaft (3) and/or the receiving portion (13), the stop face (11) being formed by a first broad-side face (10') of a slide element (10) in the form of an annular body, which slide element is attached by means of a second broad-side face (10") that faces away from the stop face (11) to the end face (8) of the stop sleeve (4) by means of an adhesive bond, the outside diameter of the slide element (10) being greater than the outside diameter of the end face (8) and a radially inner circumferential surface (22) of the slide element (10) resting on a contact surface (20), **characterised in that** the slide element (10) is formed by a perforated circular disk made of felt and is connected to the end face (8) by means of an adhesive layer (9), and the contact surface (20) is formed by an annular projection (19) that starts at the end face (8).

2. Chuck according to claim 1, **characterised in that** the adhesive layer (9) is a reversible adhesive layer.

3. Chuck according to any of the preceding claims, **characterised in that** a radially outer circumferential surface (21) of the slide element has the greatest diameter of the chuck.

4. Chuck according to any of the preceding claims, **characterised in that** the stop sleeve (4) is slidable with respect to the drive shaft (3) against the restoring force of a spring (17).

5. Chuck according to any of the preceding claims, **characterised in that** the stop sleeve (4) has an upper portion (4') and a lower portion (4"), the upper portion (4') being attached to an adjustment sleeve (6) and the lower portion (4') having the projection (19) and supporting the slide element (10) and being connected to the upper portion (4') in particular replaceably.

6. Chuck according to any of the preceding claims, **characterised by** a cavity (24) in a central element (7) rigidly connected to the drive shaft (3), in which cavity an insert (23) is inserted which forms the receiving portion (13).

7. Chuck according to claim 6, **characterised by** coupling elements which, in an initial position, couple the insert (23) to the central element (7) for rotation therewith, and rotationally decouple the insert (23) from the central element (7) after an axial displacement of the stop sleeve (4).

8. Chuck according to claim 7, **characterised in that** the coupling elements are formed by coupling balls (32) inserted in a coupling window (33), which balls shift into an alternative chamber (37) when decoupled.

9. Chuck according to claim 8 in conjunction with claim 5, **characterised in that** the adjustment sleeve (6) has a control edge (36) which is arranged between an inner wall of the adjustment sleeve (6) that delimits the alternative chamber (37) and a contact surface (35), which is likewise formed by an inner wall portion of the adjustment sleeve (6).

## Revendications

1. Mandrin à butée de profondeur, comportant un arbre d'entraînement (3), un logement d'accueil (13) pour recevoir un outil (2) et une surface de butée (11) pour la butée aux fins de limitation de profondeur d'une douille de butée (4) sur la surface (16') d'une pièce d'oeuvre (16), la douille de butée (11) étant disposée radialement par rapport à un axe de rotation traversant l'arbre d'entraînement (3) et/ou le logement d'accueil (13) et éloigné du logement d'accueil (13), dans lequel la surface de butée (11) est formée par une première surface latérale large (10') d'un élément de glissement (10) en forme de corps annulaire, qui est fixé avec une deuxième surface latérale large (10"), dirigée à l'opposé de la surface de butée (11), au côté frontal (8) de la douille de butée (4) au moyen d'un collage, dans lequel le diamètre extérieur de l'élément de glissement (10) est supérieur au diamètre extérieur du côté frontal (8) et dans lequel une surface périphérique radialement intérieure (22) de l'élément de glissement (10) est en appui contre une surface de butée (20), **caractérisé en ce que** l'élément de glissement (10) est formé par un disque circulaire perforé en feutre et est lié au côté frontal (8) au moyen d'une couche adhésive (9), et la surface de butée (20) est formée par une extension annulaire (19) partant du côté frontal (8).

2. Mandrin selon la revendication 1, **caractérisé en ce que** la couche adhésive (9) est une couche adhésive réversible.

3. Mandrin selon l'une des revendications précédentes, **caractérisé en ce qu'**une surface périphérique radialement extérieure (21) de l'élément de glissement présente le plus grand diamètre du mandrin.

4. Mandrin selon l'une des revendications précédentes, **caractérisé en ce que** la douille de butée (4) peut être déplacée par rapport à l'arbre d'entrainement (3) à l'encontre de la force de rappel d'un ressort (17).

5. Mandrin selon l'une des revendications précédentes, **caractérisé en ce que** la douille de butée (4) comprend une partie supérieure (4') et une partie inférieure (4"), dans lequel la partie supérieure (4') est fixée à une douille de réglage (6) et la partie inférieure (4") comprend l'extension (19) et porte l'élément de glissement (10) et est notamment liée de manière amovible à la partie supérieure (4').

6. Mandrin selon l'une des revendications précédentes, **caractérisé par** une cavité (24) d'un élément central (7) lié de manière fixe à l'arbre d'entraînement (3), dans laquelle est inséré un insert (23) qui forme le logement d'accueil (13).

7. Mandrin selon la revendication 6, **caractérisé par** des éléments d'accouplement qui, dans une position initiale, accouplent fixement en rotation l'insert (23) à l'élément central (7) et, après un déplacement axial de la douille de butée (4), désaccouplent en rotation l'insert (23) de l'élément central (7).

8. Mandrin selon la revendication 7, **caractérisé en ce que** les éléments d'accouplement sont formés par des billes d'accouplement (32) placées dans une fenêtre d'accouplement (33) et qui, dans une position désaccouplée, s'échappent dans une chambre d'échappement (37).

9. Mandrin selon la revendication 8 en liaison avec la revendication 5, **caractérisé en ce que** la douille de réglage (6) présente un flanc de commande (36) disposé entre une paroi intérieure de la douille de réglage (6) délimitant la chambre d'échappement (37) et une surface d'appui (35) également formée par une partie de paroi intérieure de la douille de réglage (6).
